(19) Europäisches Patentamt European Patent Office Office européen des brevets

(11) **EP 4 623 220 B1**

(12) **EUROPEAN PATENT SPECIFICATION**

(45) Date of publication and mention
of the grant of the patent:
**06.05.2026 Bulletin 2026/19**

(21) Application number: **23838251.9**

(22) Date of filing: **06.12.2023**

(51) International Patent Classification (IPC):
**F16F 9/04** *(2006.01)* **F16F 9/05** *(2006.01)*

(52) Cooperative Patent Classification (CPC):
**F16F 9/05; F16F 9/0472**

(86) International application number:
**PCT/TR2023/051487**

(87) International publication number:
**WO 2025/095880 (08.05.2025 Gazette 2025/19)**

(54) **AIR SPRING WITH VISCOUS DAMPING**

LUFTFEDER MIT VISKOSER DÄMPFUNG

RESSORT PNEUMATIQUE À AMORTISSEMENT VISQUEUX

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.10.2023 TR 2023014107**

(43) Date of publication of application:
**01.10.2025 Bulletin 2025/40**

(73) Proprietors:
- **Sampa Otomotiv Sanayi Ve Ticaret Anonim Sirketi**
  **55300 Samsun (TR)**
- **Sampa Camp Teknoloji Anonim Sirketi**
  **Istanbul (TR)**

(72) Inventors:
- **CEP, Nurettin Husnu**
  **55300 Samsun (TR)**
- **ALBAYRAK, Ismail Utku**
  **55300 Samsun (TR)**
- **ORAL, Tolga**
  **55300 Samsun (TR)**

(74) Representative: **Genç Ilhan, Oznur**
**Istanbul Patent A.S.**
**Plaza 33, Buyukdere Cad. No: 33/16**
**Sisli**
**34381 Istanbul (TR)**

(56) References cited:
**US-A- 5 628 496    US-B2- 7 644 943**
**US-B2- 8 800 975**

## Description

This invention pertains to achieving a laminar air flow between the chambers and providing the air bellows with the necessary amount of viscous damping force for the pneumatic suspension system, all at a lower cost by eliminating the use of a shock absorber in the pneumatic suspension system. Unlike air springs in the known state of the art, this invention involves having a porous air flow restrictor element between the internal volume of the bellow region and piston region. This not only ensures laminar air flow between the chambers but also imparts the air bellows with the ability to provide the required amount of viscous damping force for the system.

In pneumatic suspension systems used in vehicles, air bellows are used to dampen vibrations caused by road conditions. The air springs are usually made of an elastomeric material and designed as a large air cushion. It receives air from an air source controlled by an air compressor or pneumatic system on the suspension system. The air springs can vary this air pressure to adjust the height and ride characteristics of the vehicle. The air spring improves ride comfort by dampening shocks and vibrations at the point where the vehicle's wheels contact the road surface. It also adapts to ground conditions and road conditions by changing the height of the vehicle. Air bellows are generally used in large and heavy commercial vehicles such as commercial trucks and buses. In such vehicles, pneumatic suspension systems are preferred for purposes such as increasing the load carrying capacity or adjusting the height of the vehicle.

Another damping part used in the pneumatic suspension system is the shock absorber, shock absorbers are the parts that act as damping in the system and are used to control the vibrations of the suspension system, absorb impacts and improve the handling of the wheels. Shock absorbers are designed to dampen vibrations that occur when the wheels react to unevenness on the road surface. These vibrations can adversely affect the handling of the vehicle and reduce driving comfort. The main task of shock absorbers is to dampen the energy generated by these vibrations, allowing the wheels to grip the road surface more smoothly.

The loss of functional properties of the shock absorber element used in the pneumatic suspension systems of heavy commercial vehicles over time creates a major disadvantage for driving safety and comfort. The hydraulic oil in the shock absorber loses its properties over time, the amount of oil decreases due to leakage and other mechanical failures require maintenance on the shock absorbers.

In addition, since the shock absorber works at a certain angle on the axle, the direction of the transmitted force is not in a one direction. This situation has negative effects on the loads carried by the vehicle and driver comfort. For these reasons, the service life of the shock absorber decreases and the entire suspension system is negatively affected.

American patent document US7644943B2, which is in the known state of the art, said patent document relates to an air bellows arrangement for vehicle suspension systems. In this embodiment, the air bellows and the damper assembly are associated with a porous flow control device located between the air chambers to maintain a laminar flow of air along the flow path of the fluid due to the movement of the air bellows.

The porosity air restrictor described in this document is electronically controlled and designed with the ability to be connected to more than one gas chamber. This arrangement is complex and the electronic control unit increases the cost of the product and increases the frequency of replacement and maintenance costs. At the same time, damping can be done depending on an external energy source, which causes the vehicle to consume more energy.

American patent document US8540222B2, which is in the state of the art, relates to an air springs mounted on axle or suspension systems used in heavy commercial vehicles. According to the patent document, in order to maximise the functionality of the air springs, an opening is provided between the bellows chamber and the piston chamber for fluid transmission. This design optimises gas and fluid movement in the bellows. The opening mentioned in the patent document has a specific surface area. This surface area is intended to optimise the damping characteristics of the air springs. In other words, the movement of the fluid and the control of the gas pressure are regulated according to these design details.

However, as stated in the patent document, this special damping characteristic is not always the same. Especially in high frequency oscillations, the ability of the fluid to maintain its fluidity reduces and turbulent flow is observed between the chambers. This adversely affects the damping characteristics of the air bellows, both reducing its performance and shortening its life.

In the American patent document US9744824B2, which is in the state of the art, relates to the combination of air springs and shock absorber with damping feature used in heavy commercial vehicle axle / suspension systems. The damping air springs and shock absorber referred to herein are operably connected to the axle/suspension system. The damping air spring allows the axle/suspension system to operate at frequencies in the primary frequency range of 0 Hz to 6 Hz. The use of the shock absorber optimises the damping characteristics of the axle/suspension system, especially in the second frequency range from 0 Hz to 13 Hz.

In this document, shock absorber element is used in the pneumatic suspension system of heavy commercial vehicles. Since it is known that the shock absorber loses its functional properties over time, it creates some disadvantages in the driving safety and comfort of the vehicle. In addition, the oil in the shock absorber loses its characteristics over time and requires maintenance due to its failures such as leaking. In addition, since shock absorbers are usually mounted to the pneumatic suspension systems at an angle, the service periods of the systems are shortened.

The aim of the present invention is to replace the air springs and shock absorbers used in the pneumatic suspension systems of heavy vehicles, to provide damping force only through the air springs by removing the shock absorber element, and to create an air springs capable of viscous damping that does not lose its damping characteristics at high frequency oscillations. Therefore, since the need for a shock absorber in the suspension is eliminated, achieving lower system costs, less maintenance, weight reduction and improvements in driving comfort and handling is aimed.

The objective of the present invention is to replace the air springs and shock absorbers used in pneumatic suspension systems of heavy vehicles, by removing the shock absorber element and providing damping force only through the air springs and to create a viscous damping air springs that does not lose its damping characteristics at high frequency oscillations. Therefore, since the need for a shock absorber in the suspension will be eliminated, achieving lower system costs, less maintenance, weight reduction and improvements in driving comfort and handling is aimed.

The air spring for achieving the objective of the present invention is shown in the accompanying figures:

Figure 1 - Perspective view of the pneumatic axle/suspension system in the prior art.
Figure 2 - Sectional view of the air springs in the state of the art.
Figure 3 - Sectional view of the air springs of the invention.
Figure 4 - A perspective view of the porous air flow restrictor element of the air springs of the invention.
Figure 5 - The damping characteristic graph of the air spring subjected to the invention up to 13 Hz.
Figure 6 - A perspective view of the piston in another embodiment of the invention.

The parts in the figures are numbered one by one and the corresponding numbers are given below.

1    Air spring
2    Plate
3    Bellow
4    Piston
5    Porous air flow rate restrictor element
6    Porous surface cross-sectional area
7    Bumper
$V_1$    Piston Chamber
$V_2$    Bellow Chamber

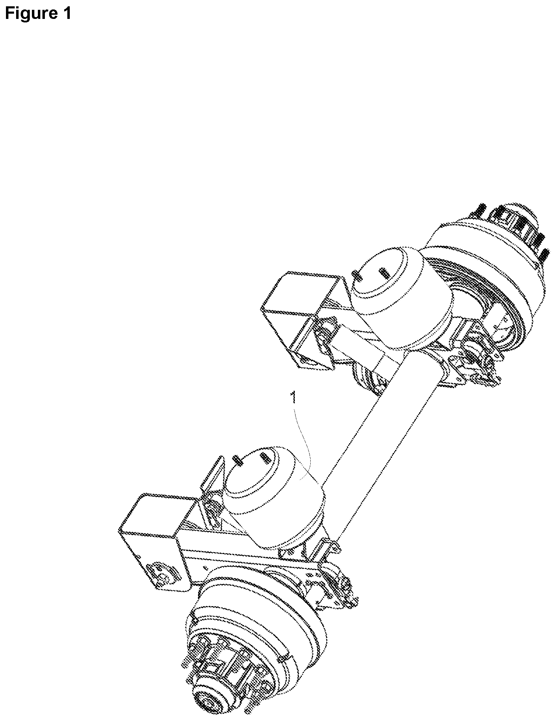

Viscous damping air springs (1) comprises at least one plate (2) providing the connection of the suspension with the chassis, at least one piston (4) providing the connection of the vehicle with the suspension system and at least one bellows (3) providing a sealed connection of the plate (2) and the piston (4) with each other, at least one piston chamber (V1), at least one bellows chamber (V2) operatively connected to the piston chamber (V1), at least one porous air flow rate restrictor element (5) which is positioned on the piston (4) between said bellows chamber (V2) and said piston chamber (V1) for transferring fluid between said bellows chamber (V2) and said piston chamber (V1) (Figure 1, Figure 3 and Figure 4).

The porosity ratio of the air flow restrictor element (5) having said porous media is between 30% and 45%, wherein said porosity ratio is preferably 38% and the cross-sectional area is preferably 320 square millimetres, and this value is changed to set the optimum value according to the load of the vehicle. Due to the porosity ratio of the air flow restrictor element (5) being preferably 38 % and the cross-sectional area preferably 320 square millimetres in the specified dimensions, an improvement in the damping characteristics compared to the state of the art is observed in the air bellows (1), especially in heavy commercial vehicles.

Due to the porosity ratios adjusted to specific proportions, the air springs (1) achieve better damping characteristics at high frequency oscillations, at the same pressure and height compared to the known state of the art. This results in a laminar air flow between the chambers (V1, V2). In addition, by varying the porosity ratio and cross-sectional area, optimum damping forces at high frequency oscillations can be obtained for different types of bellows. Laminar flow can be achieved without needing to design a complex structure, thus reducing the production and maintenance costs. Uniform and consistent damping performance is achieved throughout the effective life of the air springs (1). Furthermore, since there is no turbulence between the fluid chambers during the dynamic movement of the air spring (1), driving comfort and safety are improved (Figures 1- 4).

Since the pneumatic suspension system dampens the shocks that occur when the wheels encounter obstacles such as bumps or paving stones on the road, the air in the bellows chamber (V2) is compressed during the occurrence of these shocks and the air pressure here increases. Meanwhile, the air pressure in the piston chamber (V1) remains lower than the air pressure in the bellows chamber (V2). Air flows between the bellows chamber (V2) and the piston chamber (V1) until this pressure difference is equalised. During this flow, the air is forced to pass over the air flow restrictor element (5), which has a porous media, and a viscous damping force is generated. Since the air passes through a porous media, the damping is evenly distributed without turbulence. For this reason, comfort and safety factors are not reduced even if the bellows operates at high operating frequency oscillations. (Figure 1, Figure 3 and Figure 4).

When the mentioned suspension system encounters factors such as large potholes or holes in the road, the axle moves linearly away from the vehicle chassis. In this case, as the bellows (3) extends, the bellows-chamber (V2) expands and a pressure drop occurs. This pressure drop creates a pressure difference between the bellows chamber (V2) and the piston chamber (V1). In order to equalise this pressure difference, air flows from the piston chamber (V1) to the bellows chamber (V2) through the air flow rate restrictor element (5), which is a porous media, thereby creating a damping force. When the movement stops, the pressure difference between the bellows chamber (V2) and the piston chamber (V1) equalises (Figure 1, Figure 3 and Figure 4).

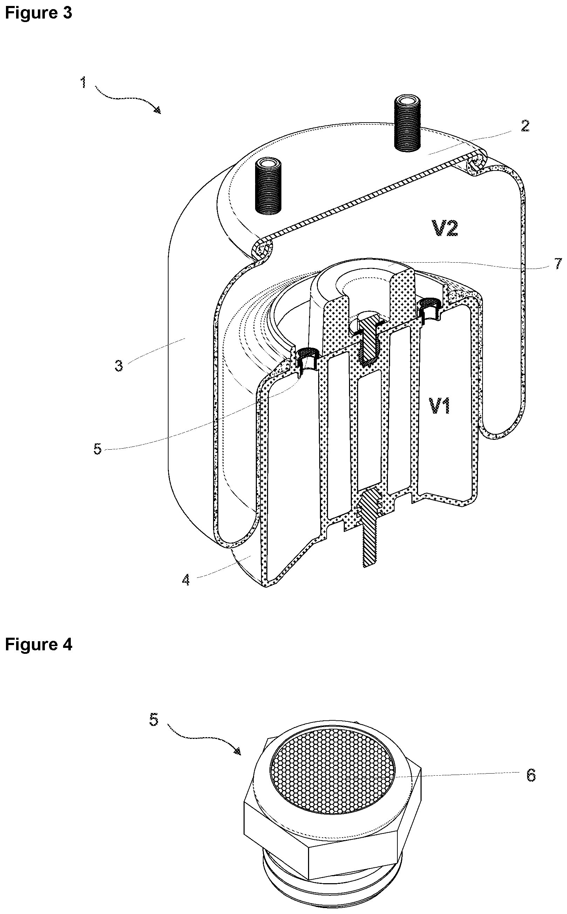

Assuming that the bellows chamber (V2) and the piston chamber (V1) are of constant volume, the frequencies at which the highest damping level occurs can be found by adjusting the porosity ratio and surface cross-sectional area (6) of the porous air flow rate restrictor element (5). The viscous damping level here is measured by the amount of energy lost when the air spring (1) performs one dynamic movement cycle. Considering the porous surface cross-sectional area (6) as a constant, the air flow flow restricting element (5) with a porous structure with a lower porosity ratio will increase the amount of energy lost, thus generating a higher level of damping force. On the contrary, when the porous surface cross-sectional area (6) is considered constant, the air flow rate restricting element (5), which has a porosity structure with a higher porosity ratio, creates a lower level of viscous damping force as it will decrease the amount of energy lost (Figure 3 and Figure 4).

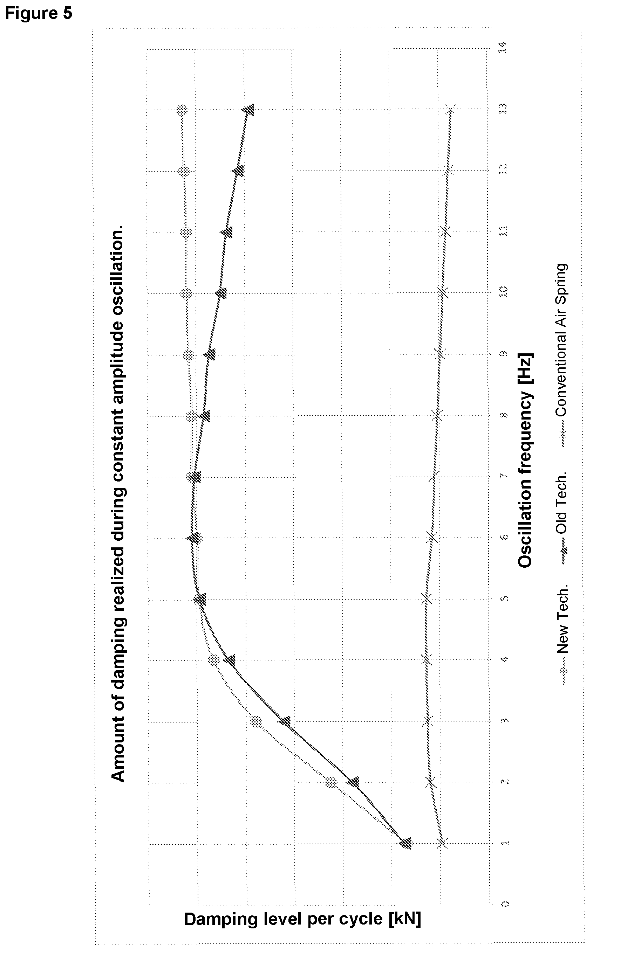

The air spring (1) referred in the present invention can provide optimum damping characteristic at critically high frequency of 13.0 Hz and can also keep on providing consistent damping characteristics even at relatively higher frequency oscillations. For this reason, the ability of the air spring (1) to maintain optimum damping characteristics at high frequencies reduces the transmission of forces acting on the suspension system and extends the life of the elements in the suspension system. The damping characteristic of the present invention reaches optimum at a frequency of about 5 Hz and maintains this optimum damping force at high critical frequencies of about 13 Hz. This provides a comfortable ride by reducing the transmission of forces acting on the suspension system and also ensures that the components of the suspension system, tyres and other components of the vehicle wear out later (Figure 3, Figure 4 and Figure 5).

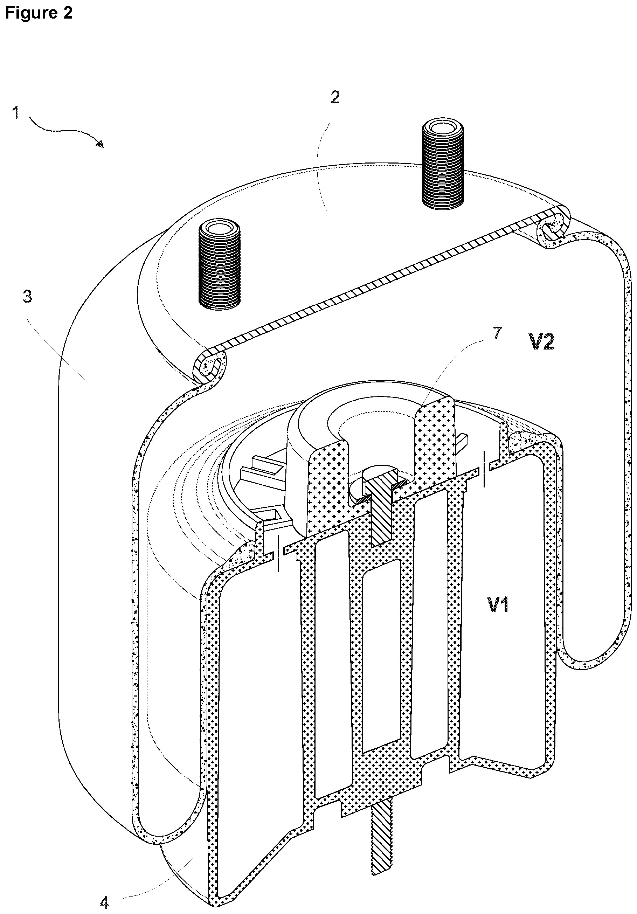

In suspension systems using viscous damping air springs (1) even without a shock absorber element, the damping force decreases relatively after a certain frequency oscillation value. When the air flow restrictor element (5) with porous media is used, no decrease in the damping force is observed after the frequency oscillation at which the maximum damping force occurs. The reason for this is that the air passing through the air flow restrictor element (5) with porous media can pass to bellows or piston chambers (V1, V2) in a laminar manner. In this way, potential bellows (3) wear and load damage due to decreasing damping force at higher frequency oscillations are prevented. More specifically, the damping characteristics of the air springs in the state of the art potentially provide less than optimum damping at critical high frequencies, such as about 13.0 Hz, potentially resulting in a negative effect on the life of the suspension system components, including potentially increased tyre wear and load damage. The porous air flow rate restrictor element (5) described in the invention can be used to prevent the aforementioned (Figures 2 - 5).

The porosity ratio of the air flow rate restrictor element (5) is calculated according to DIN ISO 30911-3.

According to DIN ISO 30911-3:

$$\text{Porosity (\%)} = \{ \; ( \text{Total Volume} - \text{Porous Volume} ) \; / \; \text{Total Volume} \; \} \; \text{x } 100$$

In one embodiment of the invention, the porosity ratio of the air flow flow restrictor element (5) having a porosity structure on the air springs (1) is preferably between 37% and 40% and the surface area is between 304 mm2 and 328 mm2. In embodiments with these value ranges, optimum damping characteristics at high frequencies are obtained in more specific applications of the air springs (1). The porosity ratio can be controlled according to the change in the porous surface cross-sectional area (6). This way, high damping forces are generated at high frequency oscillations with respect to different porosity ratio and surface cross-sectional area values. It can also be used in different types of bellows applications (Figure 3 and Figure 4).

In one embodiment of the invention, the piston (4) of the air springs (1) may be made of metal. With this, the strength of the piston (4) of the air bellows (1) is increased and can be produced by different production methods.

In one embodiment of the invention, the porous air flow restrictor element (5) on the air springs (1) is made of sintered metal material. This creates a porous media and ensures that structural integrity is maintained at high pressure differences (Figure 4).

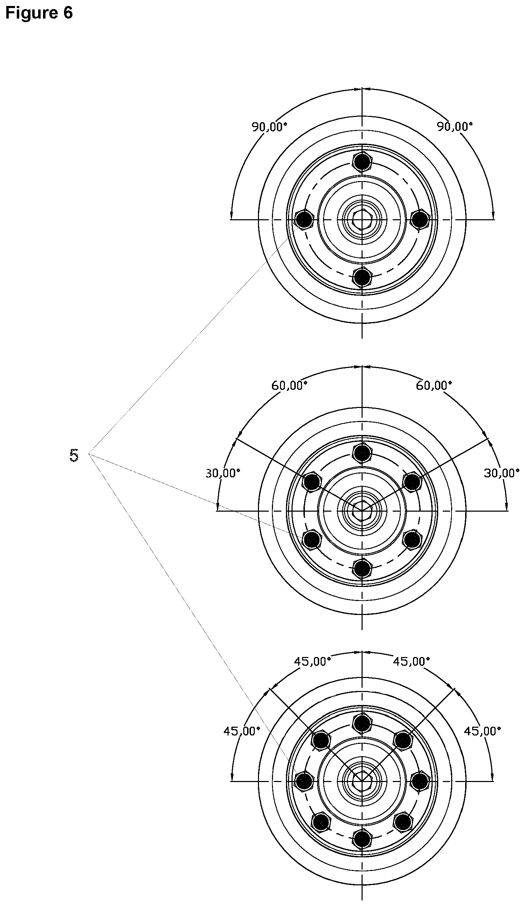

In one embodiment of the invention, the air flow restrictor element (5) on the air bellows (1) is located on the piston (4) in at least two locations (Figure 6).

Having at least two of them provides a more uniform air pressure distribution within the chambers during the movement of the air bellows on the suspension. This reduces the load per air restrictor element (5) due to viscous damping and prolongs the service life of said element (Figure 6).

In one embodiment of the invention, the air flow restrictor element (5) on the air springs (1) is symmetrically placed on the piston (4) (Figure 6).

By being symmetrical, it is ensured that the viscous damping load falling on the elements (5) is distributed equally, so that the service life of the elements (5) ends at the same time and the replacement periods are synchronised so that the part replacement intervals are optimised. Premature failure of any of the elements (5) mounted on the piston (4) is prevented (Figure 6).

With this invention, the porous air flow restrictor element (5) on the air spring (1) provides laminar control of the air flow between the bellows chamber (1) and the piston chamber (V1, V2). In this way, it is ensured that the air spring (1) does not lose its damping characteristics at high frequency oscillations, especially in heavy commercial vehicles.

In the state of the art, turbulences caused by the air flow between the chambers (V1, V2), especially in the areas where high frequency damping is desired, cannot continuously perform viscous damping. The pressure equalisation between the chambers is delayed and thus the damping feature is lost.

This invention is designed with a porous air flow restrictor element (5) that does not create turbulence in the air flow between the chambers (V1,V2) and allows smooth and linear air flow in order to damp at high frequencies. The porosity ratio and surface area size of the mentioned flow restrictor element (5) continue to provide optimum damping at the damping frequency required by the vehicles. This is not possible in the known state of the art.

**Claims**

1. Air spring with viscous damping used in pneumatic suspension system in vehicles, comprising at least one plate (2) for connecting the suspension with the chassis, at least one piston (4) for connecting the vehicle with the suspension system and at least one bellows (3) for sealingly connecting the plate (2) and the piston (4), at least one piston chamber (V1), at least one bellows chamber (V2) operatively connected to the piston chamber (V1), at least one air flow restrictor element (5) having at least one porous media and positioned on the piston (4) between said bellows chamber (V2) and said piston chamber (V1) for the transmission of fluid between said bellows chamber (V2) and said piston chamber (V1) **characterised in that** the air flow rate restrictor element (5) having the porosity ratio between 30% and 45% and surface area between 270 mm2 and 405 mm2.

2. Viscous damping air spring (1) as in claim 1, **characterised in that** the porosity ratio of the porous air flow restrictor element (5) is between 37% and 40% and the surface area is between 304 mm2 and 328 mm2.

3. Viscous damping air spring (1) as in claim 1, **characterised in that** the porous air flow restrictor element (5) is positioned on a piston (4) made of a metal material.

4. Viscous damping air spring (1) as in claim 1, **characterised in that** the porous air flow restrictor element (5) is manufactured by sintering.

5. Viscous damping air spring (1) as in claim 1, **characterised in that** the porous air flow restriction element (5) is at least two locations on the piston (4).

6. Viscous damping air spring (1) as in claim 1, **characterised in that** the porous air flow restriction element (5) is symmetrically arranged on the piston (4).

**Patentansprüche**

1. Luftfeder mit viskoser Dämpfung zur Verwendung in einem pneumatischen Federungssystem in Fahrzeugen, umfassend mindestens eine Platte (2) zum Verbinden der Federung mit dem Fahrgestell, mindestens einen Kolben (4) zum Verbinden des Fahrzeugs mit dem Federungssystem und mindestens einen Balg (3) zum abdichtenden Verbinden der Platte (2) und des Kolbens (4), mindestens eine Kolbenkammer (V1), mindestens eine Balgkammer (V2), die funktionsfähig mit der Kolbenkammer (V1) verbunden ist, mindestens ein Luftstrombegrenzungselement (5) mit mindestens einem porösen Medium, das auf dem Kolben (4) zwischen der Balgkammer (V2) und der Kolbenkammer (V1) angeordnet ist, um Fluid zwischen der Balgkammer (V2) und der Kolbenkammer (V1) zu übertragen, **dadurch gekennzeichnet, dass** das Luftstrombegrenzungselement (5) ein Porositätsverhältnis zwischen 30 % und 45 % und eine Oberfläche zwischen 270 mm2 und 405 mm2 aufweist.

**2.** Viskos gedämpfte Luftfeder (1) nach Anspruch 1, **dadurch gekennzeichnet, dass** das Porositätsverhältnis des porösen Luftstrombegrenzungselements (5) zwischen 37 % und 40 % und die Oberfläche zwischen 304 mm2 und 328 mm2 liegt.

**3.** Viskos gedämpfte Luftfeder (1) nach Anspruch 1, **dadurch gekennzeichnet, dass** das poröse Luftstrombegrenzungselement (5) auf einem Kolben (4) aus einem metallischen Werkstoff angeordnet ist.

**4.** Viskos gedämpfte Luftfeder (1) nach Anspruch 1, **dadurch gekennzeichnet, dass** das poröse Luftstrombegrenzungselement (5) durch Sintern hergestellt ist.

**5.** Viskos gedämpfte Luftfeder (1) nach Anspruch 1, **dadurch gekennzeichnet, dass** sich das poröse Luftstrombegrenzungselement (5) an mindestens zwei Stellen auf dem Kolben (4) befindet.

**6.** Viskos gedämpfte Luftfeder (1) nach Anspruch 1, **dadurch gekennzeichnet, dass** das poröse Luftstrombegrenzungselement (5) symmetrisch auf dem Kolben (4) angeordnet ist.

**Revendications**

**1.** - Ressort pneumatique à amortissement visqueux utilisé dans un système de suspension pneumatique dans des véhicules, comprenant au moins une plaque (2) destinée à relier la suspension au châssis, au moins un piston (4) destiné à relier le véhicule au système de suspension et au moins un soufflet (3) destiné à relier de manière étanche la plaque (2) et le piston (4), au moins une chambre de piston (V1), au moins une chambre de soufflet (V2) reliée fonctionnellement à la chambre de piston (V1), au moins un élément de restriction de flux d'air (5) ayant au moins un milieu poreux et positionné sur le piston (4) entre ladite chambre de soufflet (V2) et ladite chambre de piston (V1) pour la transmission de fluide entre ladite chambre de soufflet (V2) et ladite chambre de piston (V1), **caractérisé par le fait que** l'élément de restriction de flux d'air (5) a un taux de porosité entre 30% et 45% et une aire de surface entre 270 mm$^2$ et 405 mm$^2$.

**2.** - Ressort pneumatique à amortissement visqueux (1) selon la revendication 1, **caractérisé par le fait que** le taux de porosité de l'élément poreux de restriction de flux d'air (5) est entre 37% et 40% et que l'aire de surface est entre 304 mm$^2$ et 328 mm$^2$.

**3.** - Ressort pneumatique à amortissement visqueux (1) selon la revendication 1, **caractérisé par le fait que** l'élément poreux de restriction de flux d'air (5) est positionné sur un piston (4) fait d'un matériau métallique.

**4.** - Ressort pneumatique à amortissement visqueux (1) selon la revendication 1, **caractérisé par le fait que** l'élément poreux de restriction de flux d'air (5) est fabriqué par frittage.

**5.** - Ressort pneumatique à amortissement visqueux (1) selon la revendication 1, **caractérisé par le fait que** l'élément poreux de restriction de flux d'air (5) est à au moins deux endroits sur le piston (4).

**6.** - Ressort pneumatique à amortissement visqueux (1) selon la revendication 1, **caractérisé par le fait que** l'élément poreux de restriction de flux d'air (5) est disposé symétriquement sur le piston (4).

**Figure 1**

**Figure 2**

**Figure 3**

**Figure 4**

**Figure 5**

**Figure 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7644943 B2
- US 8540222 B2
- US 9744824 B2